# EUROPEAN PATENT APPLICATION

(11) **EP 1 465 048 A2**
(43) Date of publication of application: **06.10.2004**
(21) Application number: 04007683.8
(22) Date of filing: 30.03.2004
(51) Int. Cl.: G06F 3/033

(54) **An optical mouse and its operation method**

(30) Priority: 04.04.2003 CN 03224936; 19.05.2003 CN 03126649; 29.12.2003 CN 200310117724
(71) Applicant: Shuhai, Lin, Shenzhen, Guangdong 518032 (CN)
(72) Inventor: Shuhai, Lin, Shenzhen, Guangdong 518032 (CN)
(74) Representative: Körber, Martin, Dipl.-Phys.

(57) **Abstract**

An optical mouse and its method of changing cursor moving direction is directed to a optical mouse used for computers and a method to control moving direction of the cursor. An photoelectric mouse consists of a shell, a light emitting source and a light receiving and processing device with a light sensor and an optical lens inside said shell. Said shell has a light sensing window set up at the corresponding location of the light lens. Light from the light emitting source can be projected or reflected to said light sensing window. A lens is installed at said light sensing window to cover it. A method to change cursor movement direction of the photoelectric mouse, which will include the following procedures: To install a switch at the cursor control output wire corresponding to the installation direction of the light receiving and processing device inside the mouse. The current invention can randomly change between plane movement and finger driving and the cursor direction will change correspondingly therewith to be in accordance with the movement direction in the horizontal plane of the mouse or finger movement direction. Hence, the current invention can be installed into PCs, laptops, PDAs, Tablet PCs and other electronic devices to replace the traditional mouse, path balls, or touch panels, track points and so on to reduce the space occupied.

## Description

### Field of Invention

This invention is directed to a optical mouse used for computers and a method to control moving direction of the cursor

### Background of the Invention

Since computer operating system used graphical interface, cursor in the screens of computer must be controlled, hence, the mouse became the most important peripheral input device except for the keyboard,

The optical mouse is generally connected to computers via interfaces of COM, PS/2 or USB while the cursor displayed in computer screens will move in accordance with path of the moving mouse.

Existing optical mouse is structured in a shell, LED, optical lens, light receiving and processing device, push buttons and PCB. The LED is installed inside the shell and will emit light towards to an opening in the bottom of the shell. Hence, when the optical mouse is placed on a table surface or on a mouse pad, the light will be cast on the pad and a reflected light will occur, thus the corresponding image on the pad will be shown. The optical lens is used to focus the light that is emitted by the LED and reflected by the pad.

The light receiving and processing device will receive the focused reflected light by the lens and such light receiving and processing device has an optical sensor and a image processing unit. The optical sensing and measuring unit is composed of an electric charge coupling device (CCD), being able to pick up the image focused by the lens. Typical light receiving and processing device is the special-purpose light receiving and processing chip HDNS-2000, HDNS-2051 made by the US AGILENT. Those chips, such as HDNS-2000, can pick up 1,500 frames of images from the light-sensing window. Then, the image processing unit will make comparisons among images taken by the light-sensing unit at different time, thus making judgment on the displacements, speed and etc. of the mouse movement and converting them into electric signals corresponding to the coordinates (j÷X, j÷Y) of computers that are transmitted to the computers to control movements of the cursor.

The push button has partial of its surface exposed to the outside. When the push button is pressed by users, a micro-switch will be activated to control the cursor and clicks. The PCB is used to carry all the above-mentioned structure and electrically interlink them together

As the photoelectric mouse makes judgment on moving locations by way of optical technology, so it has the advantages of free from dust, high resolution, smooth moving and etc Optical mouse has already gradually replaced the traditional lolling bail mouse. However, as the photoelectric mouse is an active type device, namely, it requires the user to have some space to hold the mouse in moving it on a horizontal plane and effectively control it. It is not so convenient in use. Especially, long time operation of a mouse will cause muscle fatigue of the wrist and even cause injuries after long period of accumulated fatigue

### Brief Summery of the Invention

The current invention is aimed to avoid the disadvantage mentioned above and to provide an photoelectric mouse that requires only a short displacement in moving or can be only by finger touches.

The current invention also aims to provide a dual-purpose photoelectric mouse that can be moved in a horizontal plane or driven only by finger touches

The first aim of the current invention can be realized by the following way: to design an photoelectric mouse that will consist of a shell, a light source and a light receiving and processing device including a light sensor and a light lens inside the shell The shell has a light-sensing window set up at the corresponding location of the light lens and the light emitted by the light source will be projected or reflected to the light-sensing window, where a lens is installed to cover the said light-sensing window.

The current invention updates light transmission passage and control circuit of the existing technology to make it possible to slightly slide a finger on the lens of the light-sensing window of the optical mouse in order to drive the cursor move very smoothly without the need to move the mouse itself

The second aim of the current invention can be realized by the following way: to design an photoelectric mouse that consists of a shell, a lens covering lens of the light-sensing window of the shell, a light receiving and processing device inside the shell and a dual-direction switch installed at the output wire controlling cursor direction in the said light receiving and processing device.

The second aim of the current invention can be also realized by the following way: to adopt a method to change cursor movement direction of the photoelectric mouse, which will include the following procedures:

To install a switch at the cursor control output wire corresponding to the installation direction of the light receiving and processing device inside the mouse.

The current invention can randomly change between plane movement and finger driving and the cursor direction will change correspondingly therewith to be in accordance with the movement direction in the horizontal plane of the mouse or finger movement direction. Hence, the current invention can be installed into PCs, laptops, PDAs, Tablet PCs and other electronic devices to replace the traditional mouse, path balls, or touch panels, track points and so on to reduce the space occupied

### BRIEF DESCRIPTION OF THE DRAWINGS

Fig. 1 is a sketch of a preferred embodiment for the current invention.
Fig. 2 is a sketch of a second preferred embodiment for the current invention.
Fig. 3 is a sketch of a third preferred embodiment for the current invention.
Fig 4 is an appearance sketch of a third preferred embodiment for the current invention.
Fig. 5 is a lens used in the preferred embodiment of the current invention.
Fig 6 is a second lens used in the preferred embodiment of the current invention.
Fig 7 is a third lens used in the preferred embodiment of the current invention.
Fig 8 is a fourth lens used in the preferred embodiment of the current invention.
Fig 9 is a sketch which shows the second preferred embodiment for the current invention used in notebook PC.
Fig 10 is a sketch of relations between the light sensing processor, interface processor and computer.
Fig. 11 is the circuitry of the preferred embodiment of the current invention.
Fig 12 is an explanatory sketch of a fifth preferred embodiment for the current invention
Fig 13 is an explanatory sketch of a sixth preferred embodiment for the current invention.
Fig 14 is an explanatory sketch of a fourth preferred embodiment for the current invention.
Fig 15 is an explanatory sketch of a seventh preferred embodiment for the current invention.

### PREFERRED EMBODIMENT

The current invention shall be further described in combination of the preferred embodiment.

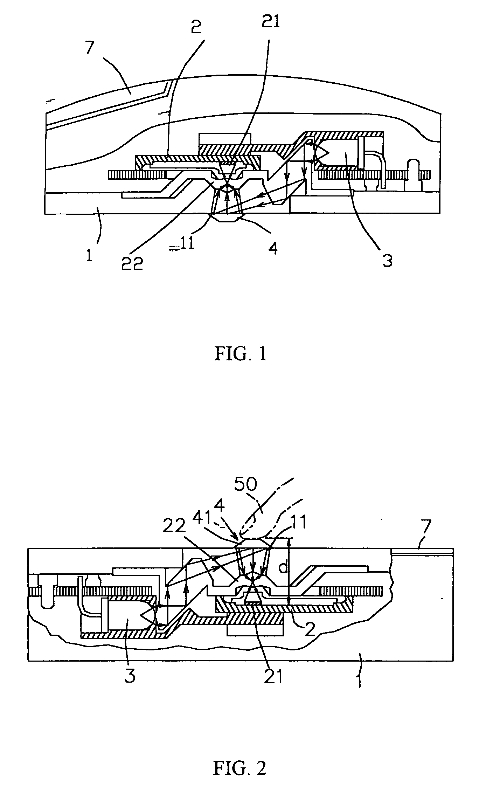

As shown in Fig 1, an photoelectric mouse consists of a shell 1, a light emitting source 3 and a light receiving and processing device 2 with a light sensor 21 and an optical lens 22 inside said shell 1 Said shell 1 has a light sensing window 11 set up at the corresponding location of the light lens 22. Light from the light emitting source 3 can be projected or reflected to said light sensing window 11 A lens 4 is installed at said light sensing window 11 to cover it.

Said lens 4 is a convex lens.

Said convex lens 4 has its convex surface towards outside of said shell 1

The shell 1 is made of insulation material and there is an opening 11 set up at the shell's upper surface. The lens 4 is inserted along the peripheral of said opening 11 in the shell 1, hence it will cover the opening 11. The lens 4 has also a projected surface higher than the surface 41 of said shell 1 and a surface 42 on the opposite side of said projected surface 41. In this embodiment, the lens 4 is made of transparent glass, plastic or resin that is a plane convex lens with one surface, i.e., the surface 42, being a plane. The lens surface 41 is convex shaped in certain curvature, so in case of viewing from the surface 42 to 41, images will be amplified Said surface 41 is for users to touch with finger 50 forth and back to make cursor move in accordance with the movements of the finger 50.

The light emitting source 3 is installed inside the shell 1 and is used to emit light to the opening 11 and lens 4 In this preferred embodiment, the light emitting source refers to a LED that emits light at a wavelength of 639nm So, when a user touches the surface 41 of said lens 4 with finger 50, light emitted by the light emitting source 3 will be refracted many times in sequence of lens surface 42 and 41 before it reaches the contact surface of finger 50 and lens surface 41. Owing to blockade by the contact surface, the light beam cannot proceed and will be reflected by the contact surface, which, in turn, will go through the lens surface 41, 42 and proceed into inside the shell 1 Color of the light can be selected by users.

The optical lens 4 is set inside the shell 1 and can focus the reflected light from the lens 4, which can be HDNS-2100 made by Agilent. The light receiving and processing device 2 is also set inside the shell 1. In this preferred embodiment, the light receiving and processing device 2 is a photo sensing chip such as the ADNS-2501 photo sensing chip, under which there is a lens facing to the photo sensor 21 of the lens 22. The photo sensor 21 consists of several sets of electric charge coupling devices or a CMOS, which is able to take 1,500 frames of images. Besides, said light receiving and processing device 2 has also a image processing unit (DSP), which is able to calculate and compare the images taken by the photo sensor 21 at different time to define differences between various images and convert such difference into electric signals including displacements of both X and Y coordinates, which are transmitted to the electronic device (computer) to control cursor movement

The light receiving and processing device 2 and light source 3 mentioned above are welded onto a PCB 7 for easy assemble

At least one push button 7 is set in the shell for users to move and click the cursor.

So, when a user moves his finger 50 to and fro on the lens 4, the reflected light beam radiates the contact surface of the finger 50 and the first lens surface 41 and the light receiving and processing device 2 can make a judgment on moving distance of the finger 50 by way of the image carried by the reflected light and thus control cursor movement There is no need for extra space to move the current invention.

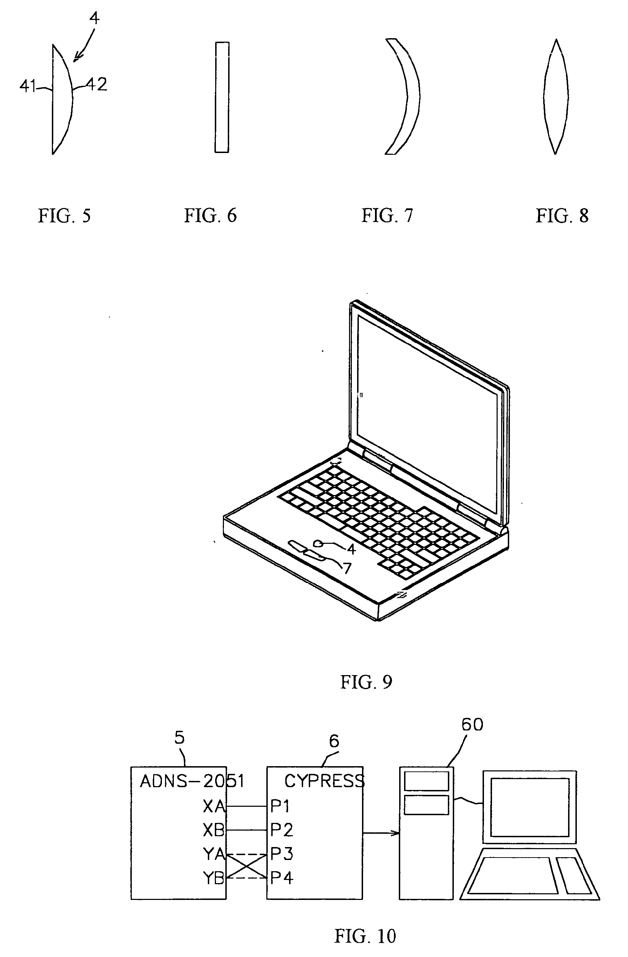

Said convex lens 4 is 1 to 15 times in amplification, which can be selected by the user's need. In case of game playing, high amplification mouse can be selected for smooth movements of the cursor. Sensitivity of cursor movement is decided by convex lens amplification folds and computer processing speed. The convex lens 4 can be made of transparent materials such as glass, plastic or resin In this preferred embodiment the amplification fold is 2.5 times Fig. 5, Fig.7 and Fig.8 are shapes that can be adopted for the convex lens respectively.

As shown in Fig. 6, when amplification fold is one, said lens 4 is a plane glass. At this time, cursor movement sensitivity totally depends on CPU processing speed.

Thickness of said convex lens 4 is less than 3mm.

For images that can be taken by light receiving and processing device, there is an optimum focal length d, as shown in Fig. 2. Said convex lens 4 is at a distance to the light sensor to make it possible for the convex lens 4 to focus the reflected light concentrated in the optical lens 22. The surface of said convex lens 4 is between 7 3mm and 8 5mm away from said light sensor. In this preferred embodiment, the distance d is 7 45mm and the main target of lens 4 is to maintain constant light channel, i.e., as the user must slide his finger 50 on the lens surface 41 and the distance d from the lens surface 41 to the light receiving and processing device 2 is maintained constant, so the reflected light must go through a certain distance to guarantee the focal distance of the light receiving and processing device for taking images; especially, as the lens surface 41 is a convex surface, hence contact surface image is amplified, resulting in amplified displacement sensed by the light receiving and processing device 2 and sensitivity of cursor movement is high. Thickness of this lens 4 is less than 2mm and its effect is the best when its amplification is between 1 and 15 folds. It will not be only limited to the above thickness and amplification, but also defined by sensitivity when it is designed. Although operational sensitivity may be different as the result of different lens having different amplification or minification, the same function of the current invention can be reached.

As shown in Fig.2, said light receiving and processing device 2 is upside down, the light sensing window 11 with the convex lens 4 is installed on the panel where the push button 7 is located. In order to facilitate finger moving and touching, a convex lens is installed at the light reflecting window, which functions, firstly, to guarantee constant light transmission distance. Only when the amplification lens is touched by the finger, does the light sensor issue instructions to drive the cursor. Secondly, the convex lens amplifies the moving distance of the finger to some extent to make it easy to move the cursor.

As shown in Fig 9, this invention can be used in laptops to replace the special mouse used in laptops. The current invention is installed in front of the keypad and two push buttons are provided for users to make clicks The lens 4 replaces the traditional cursor control devices such as touch panel, track point or path balls. Both space occupied and cost are saved. In this case, the shell 1 is the shell of the laptop. The current invention can also be used in PDA, tablet computer or other kind portable electronic devices that need cursor control.

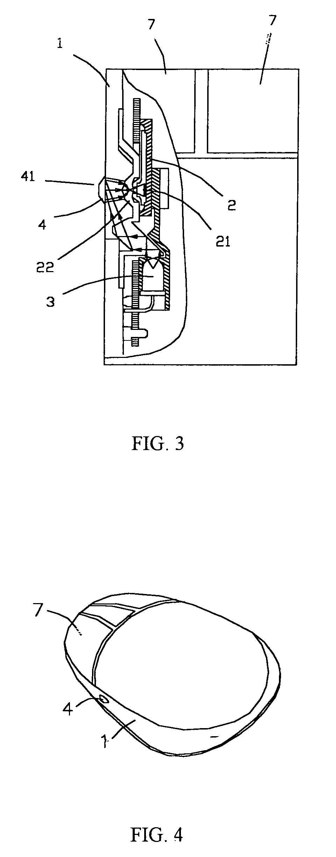

As shown in Fig 3, said light receiving and processing device 2 is set on the side and the light sensing window 11 with the convex lens 4 is set on the side of the mouse. The light-sensing window 11 with the convex lens 4 can be set on the left side of the mouse or on the right side of the mouse in accordance with the user's habit. As shown in Fig.5, the light-sensing window 11 with the convex lens 4 is set on the left side of the mouse. When the mouse is used, the user will habitually put his right thumb on the convex lens 4 to make movement controlling the cursor and use his index and middle finger to press the push button 7 for clicks.

The output terminal of the control circuit for Y axis of the mouse shall make Y axis direction of the mouse coincide with the moving direction of the object at the light-sensing window. The current invention adopts the same optical technology as that used in the existing mouse, anyhow, it is of passive motion instead of active motion of the existing mouse. In another word, viewed from the existing mouse, the current invention is to make controls by way of photoelectric mouse upside down, so when the finger 50 is moving right along the lens 4, it is equivalent to an optical mouse, which is upside down, moves to its right direction (left direction of the finger). That is to say, its X coordinates have undergone two times of 180 degree conversion and there is no need to change XA and XB output. However, its Y coordinates have gone over 180 degree conversion only once, that is why the current invention has its Y axis control just in reverse of the existing optical mouse. So, the control circuitry for the Y axis direction must be altered

Link the Y axis direction control circuit connecting points of the existing mouse crossly For said light receiving and processing device 2 is set upside down or on its side, then active movement of the mouse becomes relative movement and its Y axis direction changes 180 degrees. If it is corrected during light transmission channel, the channel will become very complicated. The current invention makes alteration on the control circuit of the existing technology to make Y axis change another 180 degrees. No component is added to realize Y axis correction The X axis direction also changes by 180 degrees because of change of mouse movement from active to relative However, as the light-sensing window of the light sensor changes from downward to upward, i e , a change of 180 degrees, so no alteration is needed If the connection is made by way of serial interface, this method can also be referred to extract Y axis data and change its direction.

In the existing mouse, there is also an interface processor 6 except for the light receiving and processing device, such as the USB interface control chip of CYPRESS CY7C63723A-PC In the many pins of the light receiving and processing device 2, there are four pins for displacement signal output, namely XA, XB, YA and YB, among which XA and XB are used for output X coordinate displacement and YA and YB are used for output Y coordinate displacement. The interface processor 6 has four pins labeled P1 to P4, which are corresponding to XA, XB, YA and YB. As shown in Fig. 10, Y axis data output port YA and YB of said light sensor chip 5 are connected to the pins 3 and 4 of the USB interface processing chip 6. The Y axis data output port YA of the light sensor processing chip 5 in the typical photoelectric mouse control circuit set inside the mouse is connected with pin 4 of the USB interface processing chip 6 and the Y axis data output port YB is connected with pin 4 of the USB interface processing chip 6 In this preferred embodiment, the light sensor processing chip is ADNS-2051 and the USB interface processing chip 6 is CY7C62001A.

As the two kinds of photoelectric mouse are different in controlling mouse movement direction and when users need to change modes while they are using one kind of mouse, the cursor movement direction will not be consistent with the movement of the mouse or finger, so they will feel rather inconvenient.

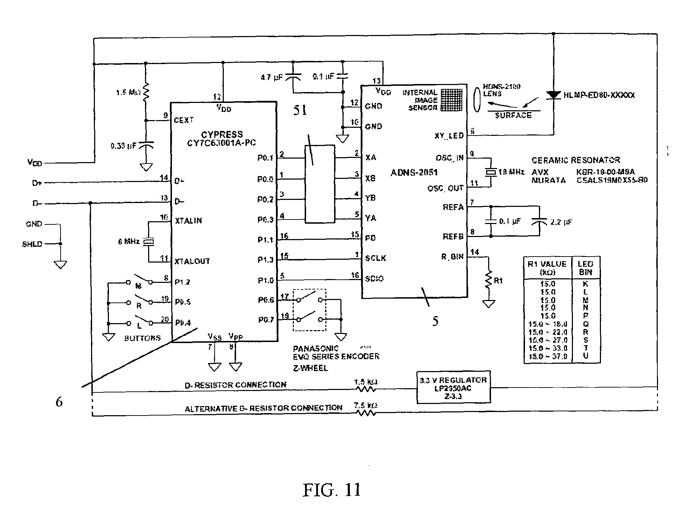

As shown in Fig. 11, a dual direction switch 51 is set in the output connection wire controlling cursor directions of said light sensor chip 5.

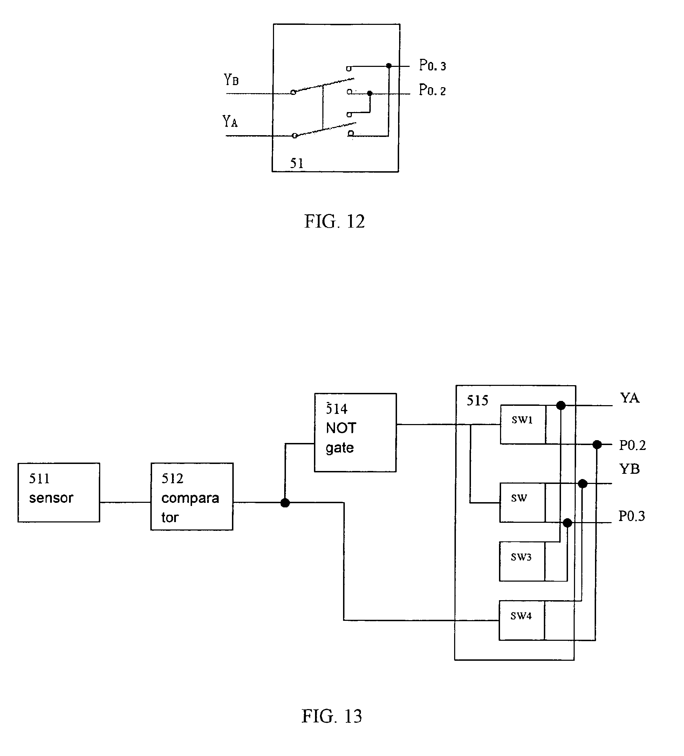

Said dual-direction switch 51 is mechanical. Besides, other touch switch, press switch, photoelectric switch installed in the mouse can all realize switching. As shown in Fig 12, the YB in the light sensor chip 5 is connected to one input port of the switch 51 while YA is connected to another input port of the switch 51 One output terminal of switch 51 is connected to P0 3 and its another terminal is connected to P0.2.

Said mechanical switch is a toggle one with its toggle rod extended out of the shell. Users can manually adjust cursor's X or Y axis based on the status in use.

Said mechanical switch is a mercury one, which is in one open-close state when the photoelectric mouse is on a horizontal state in work and is in another open-close state when it is in handheld state in work, in which the photoelectric mouse is tilted, causing the cursor's X and Y axis direction change.

Said dual-direction switch 51 is an electronic one, which can automatically enter into cursor's X and Y direction change together with working state of the photoelectric mouse.

When the photoelectric mouse is working on a desk surface or on a pad, its bottom directly contacts the desk surface or the pad while when handheld, its bottom does not contact the desk surface or the pad. The above two states cause the mouse have different induction, which is utilized for sensors, comparison circuits, gate circuits and electronic open-close switches to realize automatic transfer between desk surface and handheld working modes.

As shown in Fig. 13, the electronic switch consists of sensor 511, comparator 512, NOT gate 514 and electronic switching circuit 515. The sensor 511 transmits signals in one direction to the comparator 512, which in turn makes comparison and analysis on the signals provided by the sensor 511 and output it to the electronic switch 515 as through one channel and to the electronic switch 515 through the NOT gate 514 as another channel.

Said sensor 511 is an induction proximity switch or a capacitor proximity switch. Both of the proximity switches are in one open-close state when the photoelectric mouse is on the horizontal working state and in another open-close state when the photoelectric mouse is on the handheld working state to make the cursor's Y axis direction change.

When the photoelectric mouse is working on a desk surface or on a pad, its bottom directly contacts the desk surface or the pad while when handheld, its bottom does not contact the desk surface or the pad. The above tow states cause the mouse have different light induction. Said sensor 511 is the light receiving unit

The current invention also includes gate circuit 513, which receives signals provided by comparator 512 and makes conversion. One channel is connected to electronic switch 515 and another channel is connected to the electronic switching circuit 515 through NOT gate 514.

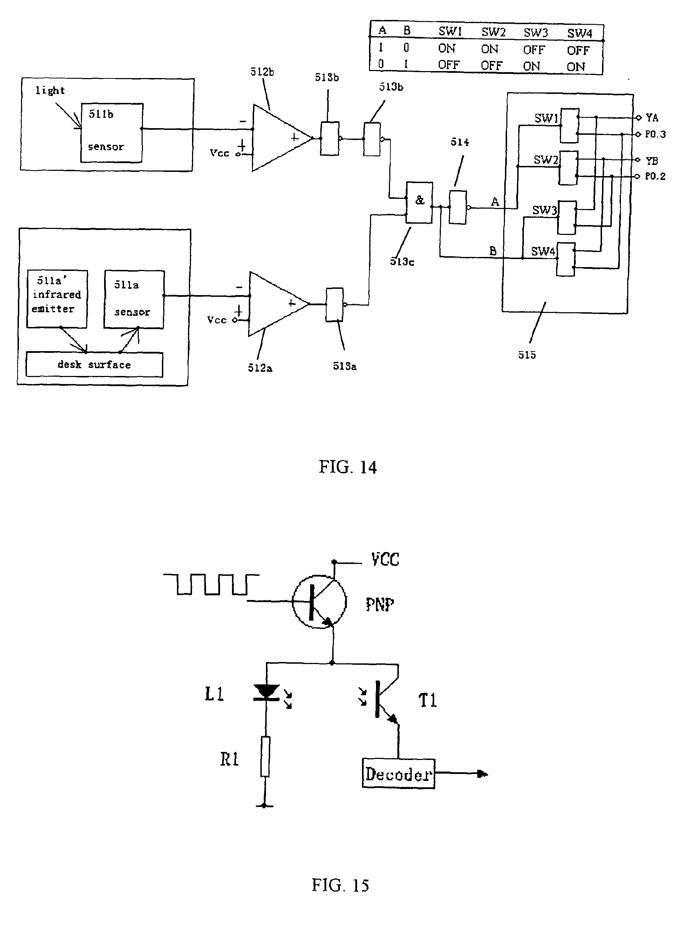

As shown in Fig 14, said sensor 511 consists of sensor 511a and sensor 511b. Sensor 511a receives light signals coming from inside the mouse and sensor 511b receives light signals coming from outside of the mouse. Signals from sensor 511a is output to comparator 512a, which makes comparison and analysis before output it to gate circuit 513 a; Signals from sensor 511b is output to comparator 512b which makes comparison and analysis before output it to gate circuit 513b; gate circuit 513a is reverse to gate circuit b, the output terminals of gate circuit 513 a and gate circuit 513 b are connected to gate circuit 513 c. Gate circuit 513 c has its output terminal connected to the electronic switch SW3, SW4 and gate circuit 513 c has its output connected to the electronic switch SW1 and SW2 through NOT gate 514.

Said sensor 511 is an infrared receiver, among which the infrared receiving unit 511 a receives infrared light emitted by the infrared emitter installed inside the photoelectric mouse and reflected by the object outside the mouse.

Said sensor 511 can be a light-sensitive element. Resistance of a light-sensitive element will change with light intensity.

Other types of sensors can also be used. Said sensor 511 consists a encoding transmitter (L1) and a encoding receiver (T1); a small hole is set in the bottom of the mouse where said encoding transmitter (L1) and encodnig receiver (T1) are laid in parallel. When the mouse is in desk top working mode, signals emitted by the encoding transmitter (L1) are reflected to the encoding receiver (T1) by the desk top surface. After decoding, desk top operational instructions will be issued; when the mouse is in handheld working mode, the encodingreceiver (T1) cannot receive encoded signals, then the decoder will issue handheld working mode operational instructions. The electric diagram is shown in Fig.15.

In the existing photoelectric mouse, there may be an interface data processor 6 except for the light sensor chip 5, for example, a USB interface control chip CYPRESS CY7C63001A-PC. The output wire controlling Y axis direction of said light sensor chip 5 in the current invention is connected to the Y axis direction control terminal of the interface data processor 6 via the dual-direction switch Said light sensor chip 5 has its Y axis data output ports YA and YB are connected to the pins 3 and 4 of the USB interface data processing chip 6. The typical photoelectric mouse control circuit set up inside the mouse has the Y axis data output port YA in its light sensor processing chip 5 connected to the pin 4 of the USB interface data processor chip 6 and the Y axis data output port YB connected to the pin 3 of the USB interface data processor chip 6 In this preferred embodiment, the light sensor processing chip 5 is ADNS-2051 and the USB interface data processing chip 6 is CY7C63001A-PC

In desk top working state, the infrared switch at the bottom of the mouse is close to the desk surface and infrared rays emitted by the infrared emitter is received by the infrared receiver 511 a, and then processed by the comparator 512 and gate circuit 513, making the point B at voltage 1 and point A at voltage 0, both electronic switch SW3 and SW4 are open and both SW1 and SW2 are closed At this time, YB of 2051 is connected to P0.2 of the interface data processing chip 63001A and YA of 2051 is connected to P0 3 of the interface data processing chip 63001A.

While in handheld working state, the infrared switch is away from the desk top surface and the infrared receiver 31 a cannot receive infrared rays After processing by the comparator 512 and gate circuit 513, the point B is at voltage 0 and point A is at voltage 1, both electronic switch SW3 and SW4 are closed and both SW1 and SW2 are open. At this time, YB of 2051 is connected to P0.3 of the interface data processing chip 63001A and YA of 2051 is connected to P0.2 of the interface data processing chip 63001A.

In case of handheld working state, strong sunlight or other infrared light source may interfere with the infrared switch to cause the infrared receiver 511 a open and the point B is at voltage 1. At this time, the infrared receiver that is specially set to receive interference infrared rays will be also activated. After processing by the comparator 512, inverter and NOT gate, the point B is again at voltage 0 to eliminate any malfunction

Commonly used photoelectric mouse has its light receiving device 1 inside the mouse in the positive direction relative to the push button layout Besides, three other layout directions are also available. For different layouts, their cursor output wire connections differ

A method for changing cursor moving directions of photoelectric mouse includes the following procedures based on the direction of the light sensor chip 5 installed inside the mouse, a switch 51 is set up at the corresponding wire controlling cursor output

The light sensor chip 5 is located at a traverse gap on the left of the photoelectric mouse. In the desk top working state, XB of 2051 is connected with P0.2 of the interface data processor chip 63001A and XA of 2051 is connected with P0 3 of the interface data processor chip 63001 A, YB of 2051 is connected with P0 0 of the interface data processor chip 63001A and YA of 2051 is connected with P0.1 of the interface data processor chip 63001A In handheld operations, XB of 2051 is connected with P0 3 of the interface data processor chip 63001 A and XA of 2051 is connected with P0.2 of the interface data processor chip 63001A; YB of 2051 is connected with P0 1 of the interface data processor chip 63001A and YA of 2051 is connected with P0.0 of the interface data processor chip 63001A Conversion between the two working states is realized by trade of connections that control the cursor X axis direction.

The light sensor chip 5 is located at a traverse gap on the right of the photoelectric mouse. In the desk top working state, XB of 2051 is connected with P0 3 of the interface data processor chip 63001A and XA of 2051 is connected with P0.2 of the intcrface data processor chip 63001A, YB of 2051 is connected with P0.0 of the interface data processor chip 63001 A and YA of 2051 is connected with P0.1 of the interface data processor chip 63001 A. In handheld operations, XB of 2051 is connected with P0 3 of the interface data processor chip 63001A and XA of 2051 is connected with P0.2 of the interface data processor chip 63001A; YB of 2051 is connected with P0.1 of the interface data processor chip 63001 A and YA of 2051 is connected with P0 0 of the interface data processor chip 63001A. Conversion between the two working states is realized by trade of connections that control the cursor Y axis direction.

The light sensor chip 5 is located at a longitudinal gap on the bottom of the photoelectric mouse. In the desk top working state, XB of 2051 is connected with P0.0 of the interface data processor chip 63001A and XA of 2051 is connected with P0.1 of the interface data processor chip 63001 A; YB of 2051 is connected with P0.2 of the interface data processor chip 63001A and YA of 2051 is connected with P0.3 of the interface data processor chip 63001A. In handheld operations, XB of 2051 is connected with P0.1 of the interface data processor chip 63001A and XA of 2051 is connected with P0.0 of the interface data processor chip 63001A; YB of 2051 is connected with P0 3 of the interface data processor chip 63001A and YA of 2051 is connected with P0 2 of the interface data processor chip 63001A. Conversion between the two working states is realized by trade of connections that control the cursor X and Y axis directions.

Said interface processor 6 can also be a control processor with radio transmitting and receiving functions, which may be 802 11a, 802.11b or bluetooth and etc. radio communication protocol to make wireless transmission with the electronic device 60. In another words, whether the current utility model is connected with the electronic device 60 by way of wires (such as USB interface, PS/2 interface or COM interface) or wireless connections, users can hold the current utility model in hand, or only slide his finger 50 on lens 4 to control the cursor. Compared with the former photoelectric mouse, there is no need to provide a flat surface for the mouse and users need not to bend over his desk to operate the mouse. Operating a computer will be just as easy as operating a TV set remote controller. It is also very easy to make lectures in classes with computers. As there is no need to move, this kind of mouse is especially suitable for laptops and handheld uses.

The current utility model uses lens 4 to maintain stable light channel, thus enabling images formed by contact of user finger 50 and lens 4 picked up by the light receiving and processing device 2, and back and forth movement of user finger 50 on lens 4 will control movement of the cursor. No extra plane surface is needed for moving the mouse, thus greatly reducing fatigue in using the mouse Furthermore, it can be realized by the existing photoelectric mouse structure and is universal in application to various electronic devices

## Claims

1. A photoelectric mouse that comprises a shell (1), a light source (3) and a light receiving and processing device (2) that has a light sensor (21) and a light lens (22), which are all installed inside said shell (1), a light sensing window (11) set at the corresponding location of a light lens (22) in the shell (1) and the light source (3) radiating or reflecting light beams onto the light sensing window (11), wherein a lens (4) is installed at said light sensing window (11), which is covered by said lens (4).

2. A photoelectric mouse that is defined in claim 1 wherein said lens (4) is a convex lens

3. A photoelectric mouse that is defined in claim 1 or 2 wherein said lens (4) has a magnifying capacity of 1 ∼ 15 folds.

4. A photoelectric mouse that is defined in claim 3 wherein said lens (4) is at a distance from the light sensor (21) to make said convex lens (4) focus reflected light beams on the optical lens (22).

5. A photoelectric mouse that is defined in claim 4 wherein the surface of said convex lens (4) is 7 3mm ~ 8.5mm away from said light controller.

6. A photoelectric mouse that is defined in claims 2 to 5 wherein the thickness of said convex lens (4) is less than 3mm.

7. A photoelectric mouse that is defined in claims 1 to 6 wherein at least one push button (7) is set in said shell for users to click the cursor.

8. A photoelectric mouse that is defined in claims 1 to 7 wherein said light sensing window (11) with a convex lens (4) can be set in any of the faces of said photoelectric mouse and said light receiving device (2) is set corresponding to the light sensing window (11) with a convex lens (4).

9. A photoelectric mouse that is defined in claims 1 to 8 wherein the output connection of the mouse Y axis direction control circuit shall make Y axis direction of the mouse in the same moving direction of an object at the light sensing window.

10. A photoelectric mouse that is defined in claim 9 wherein the Y axis data output ports YA and YB of said light sensor chip (5) are connected with pins 3 and 4 of the USB interface processor chip (6) respectively

11. A photoelectric mouse that is defined in claims 1 to 7 wherein a dual-direction switch (51) is set in the output wires that control cursor movement directions of said light sensor chip (5).

12. A photoelectric mouse that is defined in claim 11 wherein said dual-direction switch (31) is a mechanical one

13. A photoelectric mouse that is defined in claim 12 wherein said mechanical switch is a toggle switch and its toggle rod extends out of the shell.

14. A photoelectric mouse that is denned in claim 12 wherein said mechanical switch is of press type and its press point is located on the shell.

15. A photoelectric mouse that is defined in claim 12 wherein said mechanical switch is of mercury type

16. A photoelectric mouse that is defined in claim 11 wherein said dual-direction switch (51) is an electronic one

17. A photoelectric mouse that is defined in claim 16 wherein said electronic switch consists of a sensor (511), a comparator (512), a NOT gate (514) and an electronic switching circuit (515). Said sensor (511) transmits in single direction to the comparator (512), which makes comparison and analysis on the input signals from said sensor (511) and transmits the signals to the electronic circuit (515) through one channel and to the electronic circuit (515) through another channel by way of the NOT gate (514)

18. A photoelectric mouse that is defined in claim 17 wherein said sensor (511) is an induction or capacitor proximity switch.

19. A photoelectric mouse that is defined in claim 17 wherein said sensor (511) is a light receiving unit

20. A photoelectric mouse that is defined in claim 17 wherein said sensor (511) is a encoding transmitter (L1) and an encoding receiver (T1), a small hole is set in the bottom surface of said mouse to accommodate the encoding transmitter (L1) and an encoding receiver (T1) side by side.

21. A photoelectric mouse that is defined in claim 17 wherein it also includes a gate circuit (513), which receives input signals from the comparator (512) and converts the signals and transmits them to the electronic circuit (515) through one channel and to the electronic circuit (515) through another channel by way of the NOT gate (514)

22. A photoelectric mouse that is defined in claim 19 wherein said sensor (511) includes a sensor (511a) and a sensor (511b). Sensor (511a) receives light signals coming from inside of the mouse and sensor (511b) receives light signals coming from outside of the mouse, sensor (511a) transmits signals to the comparator (512a) that compares and analyzes such signals and then transmits them to the gate circuit (513a); sensor (511b) transmits signals to the comparator (512b) that compares and analyzes such signals and then transmits them to the gate circuit (513b); the gate circuit (513a) and gate circuit (513b) are reverse to each other and their output terminals are connected to the gate circuit (513c), and output terminals of said gate circuit (513c) are connected with electronic switches SW3 and SW4 and also connected with electronic switches SW1 and SW2 through NOT gate (514).

23. A photoelectric mouse that is defined in claim 22 wherein said sensor (511) is an infrared receiver, in which the infrared receiver (511 a) receives infrared light emitted by the infrared emitter (511a') installed inside the mouse and reflected by the object outside the mouse.

24. A photoelectric mouse that is defined in anyone of the claims 11 ~ 23 wherein the output wires controlling cursor movement direction of said light sensor chip (5) are connected to the cursor direction control terminals of the interface data processor (6) via the dual-direction switch (51).

25. A method of changing the cursor direction of photoelectric mouse wherein the following procedures are included:
Switch (51) shall be installed in the corresponding output connection wires that control the cursor according to the installation direction of said light sensor chip (5) inside the photoelectric mouse.
